# EUROPEAN PATENT APPLICATION

(11) **EP 1 150 206 A1**
(43) Date of publication of application: **31.10.2001**
(21) Application number: 00201550.1
(22) Date of filing: 28.04.2000
(51) Int. Cl.: G06F 9/44

(54) **A method for converting information related to the hardware/software configuration of a distributed control system**

(71) Applicant: ABB Research Ltd., 8050 Zürich (CH)
(72) Inventor: Fay, Alexander, 69221 Dossenheim (DE); Kirmair, Stefan, 69120 Heidelberg (DE); Merker, Stephan, 68723 Schwetzingen (DE); Villa, Valerio, 22020 Gironico (Co) (IT)
(74) Representative: Giavarini, Francesco

(57) **Abstract**

The present invention relates to a method for converting first information comprising a first format provided with a first syntax and a first semantics for describing the hardware/software configuration of a first distributed control system, into second information comprising a second format provided with a second syntax and a second semantics for describing the hardware/software configuration of a second distributed control system

## Description

The present invention relates to a method for converting information related to the hardware/software (HW/SW) configuration of a distributed control system (DCS).

More particularly, the present invention relates to a method for converting first information having a certain format for describing a first DCS HW/SW configuration, into second information having another format for describing a second DCS HW/SW configuration.

Distributed control systems are largely used in the state of the art with the purpose of controlling industrial processes. Particularly, distributed control systems have been conceived with the purpose of coping with the intrinsic distributed nature of said industrial processes, through a physical distribution of control units, which can communicate and exchange data/information.

A DCS processes the data/information acquired from the process and can determine the physical behaviour of the process by means of a plurality of controllers, which interface to the process.

Any DCS is typically described by data, parameters, diagrams and the like, regarding its particular HW/SW configuration.

This information typically comprises:
- information regarding the number, the type and the configuration of the controllers included in the DCS; and/or
- information regarding the number, the type and the configuration of the input/output (I/O) boards connected to the controllers; and/or
- information regarding the number, the type and the configuration of the specific means, which are used for performing communication between the controllers; and/or
- information regarding the number, the type and the configuration of the means, which are used for supervising the controllers; and/or
- information regarding the behaviour of the controllers: this information generally comprises the programs that are run by the DCS controllers and other requirements concerning, for example, the timing of said programs; and/or
- information tags, which are useful for identifying various elements of a DCS.

The information for describing a DCS HW/SW configuration is characterised by a proper format, which is provided with a syntax and a semantics. With the terms "syntax" and the term "semantics" it is respectively meant a set of codification rules and a set of functional relationships and rules, characterising an information format.

As technology proceeds, a DCS might become obsolete or, more generally, it might arise the need of controlling a certain industrial process with a different DCS, provided with more powerful hardware or software means. In this case, it is necessary to make provision for stopping the process operation, installing and configuring the new DCS.

In order to minimise the DCS upgrade costs, the information related to the HW/SW configuration of the old DCS is generally reused. This fact implies to reuse technical solutions that have already been tested during the years and, therefore, ensuring a high level of reliability for the process control.

Obviously, these technical solutions could certainly be improved but, at this point, the effort for upgrading the old DCS is certainly reduced if compared with the effort, which would be needed for generating "ex novo" the information regarding the HW/SW configuration of the new DCS.

Unfortunately, even if the process behaviour remains the same, due to the fact that the DCS is physically changed, there is only little chance of reusing the information related to the HW/SW configuration of the old DCS, as it is.

The incompatibility between the new and the old DCS HW/SW configuration forces the engineers to reprocess the information regarding the old DCS HW/SW configuration, so as to being able to reconfigure the new DCS.

In practice, the information regarding the old HW/SW configuration is converted into information, which is useful for describing the HW/SW configuration of the new DCS. A traditional approach for performing this information conversion is to use mapping tables, which allow establishing logic links between the elements of the old DCS and the elements of the new DCS. In practice, these mapping tables represent a guide, which allows creating the elements of the new DCS configuration, basing on the elements of the old DCS configuration.

This traditional approach suffers from several drawbacks.

In fact, the conversion of the information is generally realised in a manual fashion. Although the use of the mentioned mapping tables certainly represents a relief in the conversion process, the common practice has shown that the requested manual work implies significant negative consequences in terms of consistency and completeness of the information conversion.

Moreover, the activity of manually and repetitively interacting with said mapping tables might be a tremendous source of trivial mistakes which, in most cases, can be checked with great difficulty. This fact can have negative consequences when the new DCS is installed and commissioned.

The probability of making trivial mistakes is further increased by the fact that the amount of information to translate may actually be, in many cases, very huge. In fact, it should be considered that a DCS system of normal size generally comprises several controllers, thousands of signals to exchange and thousands of function blocks.

Therefore a big amount of time is needed for performing the information conversion: this fact impacts negatively the costs for upgrading the DCS system.

In order to try to solve these drawbacks, some methods of the state of the art make use of computerised tools that aim at speeding up the conversion operations.

The purpose of said computerised tools is generally to execute the conversion of the information regarding the input/output configuration of single elements of the old DCS or, very often, to execute the translation of the software programs that are run by single elements of the old DCS.

In practice, such computerised tools can be considered as partially embedding the mapping tables mentioned above, used in the more traditional approaches.

Although these methods certainly relieve engineers from part of the conversion work amount, it is not possible to consider them as a satisfactory solution for the technical problems above described.

In fact, it should be considered that a DCS is characterised by the presence of a large amount of hidden logical links, between the elements of its HW/SW configuration. Said links can pertain to very different aspects of the DCS and are essential for a good operation of the DCS.

So, although these links are not visibly represented, they are implicitly included in the DCS HW/SW configuration and they are equally important for ensuring the correct functionality of the DCS. It appears evident that the task of maintaining the consistency of these hidden links is critical during the conversion process.

Unfortunately, the use of the computerised tools of the state of the art can hardly accomplish this task, due to their capabilities, which generally are intrinsically restricted to some particular elements the DCS HW/SW configuration.

Therefore, a cumbersome amount of manual work is still needed, at least for recovering the hidden links that are characteristic of each DCS HW/SW configuration. This fact means that the mentioned drawbacks are still relevant and basically unsolved, in the common practice.

The methods of the state of the art, which make use of said computerised tools, are affected by other critical drawbacks, which can be better understood making reference to the following considerations, deduced from the common practice.

It is known that the technology of the components of the new DCS might be different from the one used for the old DCS.

So, the HW/SW configuration information of the old DCS, which is obtained by means of the mere conversion of HW/SW configuration information of the old DCS, might not ensure optimal performances for the new DCS.

This fact means that the optimisation of the information, during the conversion process, is another critical task, for minimising the installation and commissioning time of the new DCS.

Unfortunately, in the known methods of the state of the art, the optimisation of the new DCS HW/SW configuration information is generally made after the conversion of the old DCS HW/SW configuration information. This fact is due to many reasons that can be, for example, due to the "monolithic" nature of the approaches that are generally adopted. This "monolithic" nature is generally related to the fact that the used computerised tools generally do not front the task of converting the DCS HW/SW configuration as a whole, but they just aim at accomplishing conversion tasks that are restricted to specific aspects of the DCS HW/SW configuration.

Said "monolithic" approaches make difficult to establish a satisfactory level of interactivity between the user and the information flow, during the information conversion process. Consequently, installation and commissioning costs of the new DCS are not remarkably reduced.

The common practice has also put in evidence another critical drawback.

When one of the known computerised tools is used, the knowledge of the conversion rules is generally hidden in the processing logic realised by said computerised tool. Obviously, said processing logic is accessible only for expert programmers. In practice, the knowledge of DCS information conversion, once it has been transmitted to the expert programmer to create the computerised tool, is no longer accessible for the DCS experts.

Therefore, during the conversion process and the maintainance of the computerised conversion tool, a close collaboration between the expert programmers of the computerised tool and the DCS expert people is required. This makes the conversion process quite complicated to manage and very time consuming, because many people have to be involved.

The main aim of the present invention is to provide a method, which allows performing the conversion of the information related to a DCS HW/SW configuration, reducing to a negligible level the drawbacks that have been described above.

Within this scope, another object of the present invention is to provide a method, which allows maintaining, during the conversion process, the knowledge of the conversion rules on a level which is entirely accessible to the DCS expert.

Another object of the present invention is to provide a method which allows to perform the conversion of the information related to a DCS HW/SW configuration in a consistent and complete manner, and which allows to optimise, at the same time, the information content.

Another object of the present invention is to provide a method which allows to perform the conversion of the information related to a DCS HW/SW configuration, reducing to a negligible level the loss of the logical hidden connections linking different elements of the DCS HW/SW configuration.

Another object of the present invention is to provide a method which allows performing the conversion of the information related to a DCS HW/SW configuration of different distributed control systems, independently of their specific structure and configuration.

Not the least object of the present invention is to provide a method, which can be relatively easy embedded on a computerised environment, so as to allow obtaining at least a partially automatic execution of said method.

Thus, the present invention provides a method for converting first information comprising a first format provided with a first syntax and a first semantics for describing the hardware/software configuration of a first distributed control system. In the method, according to the present invention, said first information is converted into second information comprising a second format provided with a second syntax and a second semantics for describing the hardware/software configuration of a second distributed control system.

The method, according to the present invention, is characterised in that it comprises the phases of:
a) importing said first information into a computerised environment;
b) converting, by means of a computerised knowledge interpreter, said first information into third information comprising one or more formats for describing the hardware/software configuration of a virtual distributed control system, the hardware/software configuration of said virtual distributed control system being at least partially independent from the hardware/software configurations of said first distributed control system and said second distributed control systems;
c) converting, by a means of said computerised knowledge interpreter, said third information into said second information;
d) exporting said second information out of said computerised environment.

The method, according to the present invention allows achieving the intended aims.

The method, according to the present invention, performs an indirect conversion of the information related to the hardware/software configuration of the old DCS.

In fact, in a first instance, the information related to the HW/SW configuration of the old DCS into information comprising a "neutral " format, and, subsequently, said information comprising a neutral format is converted into information comprising a format, which depends on the new DCS configuration. All the elements of the old DCS configuration are, in practice, represented, during the conversion process, in a "neutral" format, which is characterised by proper syntax and semantics. Also the visible and hidden links among the DCS elements can be considered "per se" as DCS elements and can be represented in said neutral format. So, they can be converted and handled, minimising the possibilities of missing them during the conversion process. In this manner, the conversion process pertains to the information related to the old DCS configuration, taken as a whole. Moreover the method according to the present invention allows obtaining a separation between the "source" (the HW/SW configuration of the first DCS) and the "target" (the HW/SW configuration of the second DCS) of the information flow. This fact, together with the other mentioned advantages, allows achieving a high level of consistency and the reliability of the conversion, minimising the need of a human intervention.

Furthermore, an important characteristic of the method according to the present invention is that it is possible to process the information when it is converted in the "neutral" format. This allows optimising the information content and, in practice, restructuring the information in the "neutral" format before the final conversion into the information related to the new DCS HW/SW configuration. This fact implies a relevant reduction of the upgrading costs of the DCS. As it will be described more clearly in the following, the use of a computerised knowledge interpreter, allows the DCS expert people to directly interact with the conversion process. In fact, the knowledge rules are fully accessible in the mentioned knowledge bases: in this manner the conversion process can be "tuned" according to user needs, modifying, when necessary, the knowledge rules that determine the behaviour of the knowledge interpreter.

For a better understanding of the present invention, reference may be made to the detailed description reported hereinafter, taken in conjunction with the accompanying drawings in which:
figure 1 represents a block diagram, which schematically illustrates the sequence of phases included in the method according to the present invention;
figure 2 represents a second block diagram, which schematically illustrates a preferred embodiment of said computerised knowledge interpreter;
figure 3, represents a second block diagram, which schematically illustrates an example of management of said knowledge rules;
figure 4 represents a first block diagram, which schematically illustrates a preferred sequence of phases/steps included in the method according to the present invention;
figure 5 represents a second block diagram, which schematically illustrates a preferred sequence of phases/steps included in the method according to the present invention.

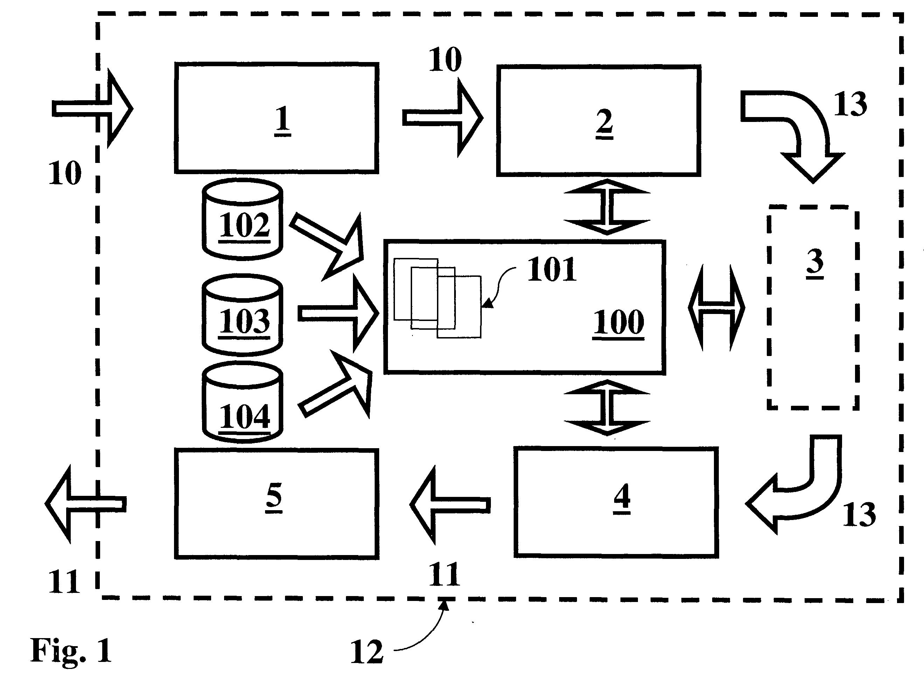

Referring to figure 1, the method according to the present invention executes a conversion of first information 10, which has a first format for describing the HW/SW configuration of a first DCS (not shown). The information 10 is converted into second information 11, which has a second format for describing the HW/SW configuration of a second DCS (not shown).

The first information 10 comprises a first format provided with a first syntax and a first semantics, while the second information 11 comprises a second format provided with a second syntax and a second semantics.

The method according to the present invention comprises the phase a) (block 1) of importing the first information 10 into a computerised environment (represented by the dashed block 12). Subsequently, the method, according to the present invention provides the phase b) (block 2) of converting, by means of a computerised knowledge interpreter 100, the first information 10 into third information 13. The third information 13 comprises one or more formats for describing the hardware/software configuration of a virtual distributed control system. Said virtual distributed control system is provided with a hardware/software configuration, which is at least partially independent from the hardware/software configurations of the mentioned first and the second distributed control systems (not shown).

In a preferred embodiment, the method according to the present invention provides the also phase e) (dashed block 3) of processing, by means of the computerised knowledge interpreter 100, the third information 13.

The third information 13 is subsequently converted, at the phase c) (block 4), into the second information 11. Also the phase c) is executed by means of the computerised knowledge interpreter 100.

Finally, the method according to the present invention provides the phase d) (block 5) of exporting the second information 11 out of the computerised environment 12.

The computerised knowledge interpreter 100 advantageously comprises one or more first computer programs 101. The programs 101 adopt, during the execution of the stages b), c) and e) predefined sets of knowledge rules (not shown) that are stored in the computerised knowledge bases 102, 103 104, linked to the computerised knowledge interpreter 100. The number of knowledge bases can be vary, according to the needs. Preferably, at least a different knowledge base is referred to each of the phases b), or c) or e), as shown in figure 1.

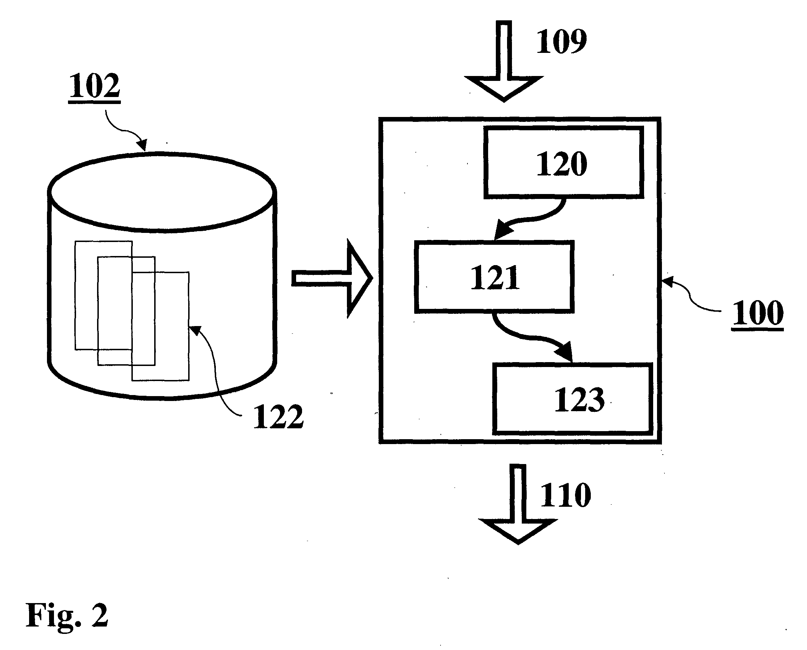

Referring now also to figure 2, it is illustrated a preferred sequence of logical steps performed by the computerised knowledge interpreter, during the execution of one of said phases. Obviously, this sequence of steps can be repeated during the execution of one of said phases.

The computerised knowledge interpreter 100 receives (block 120) one or more predefined pieces of input information 109. The computerised knowledge interpreter 100, by means of the computer programs 101 of figure 1, processes (block 121) the input information 109. The pieces of input information 109 are processed basing on the knowledge rules (reference 122) that are stored in one of the knowledge bases linked to the computerised interpreter 100 (for example in the knowledge base 102).

The result of the processing step 121 is the generation (block 123) of one or more pieces of output information 110.

The pieces of input information 109 can consist, for example, of any pieces of information, which are manipulated/processed/converted during the execution of any phase/step of method according to the present invention. For example, they can consist of pieces of information 10, or 13 (see figure 1). Accordingly, the pieces of output information 110 can consist of any pieces of information, which are generated, during the execution of the method according to the present invention, in consequence of any manipulation/processing/conversion phase/step. For example, they can consist of pieces of information 11, or 13 (see figure 1).

Obviously, the input information 109 comprises advantageously a input format, provided with a input syntax and a input semantics and, accordingly, the output information 110 comprises a output format, provided with a output syntax and a output semantics.

Said input and the output formats can be provided with syntax and semantics that are substantially equivalent. Alternatively, said formats can be different.

Preferably, according to the purposes of the present invention, the pieces of input information 109 can comprise an input format, which is provided with the same syntax but different semantics with respect to the output format. Alternatively, the input format can be provided with different syntax and same semantics or with different syntax and different semantics with respect to the output format.

Any of the knowledge rules 122 can comprise different portions.

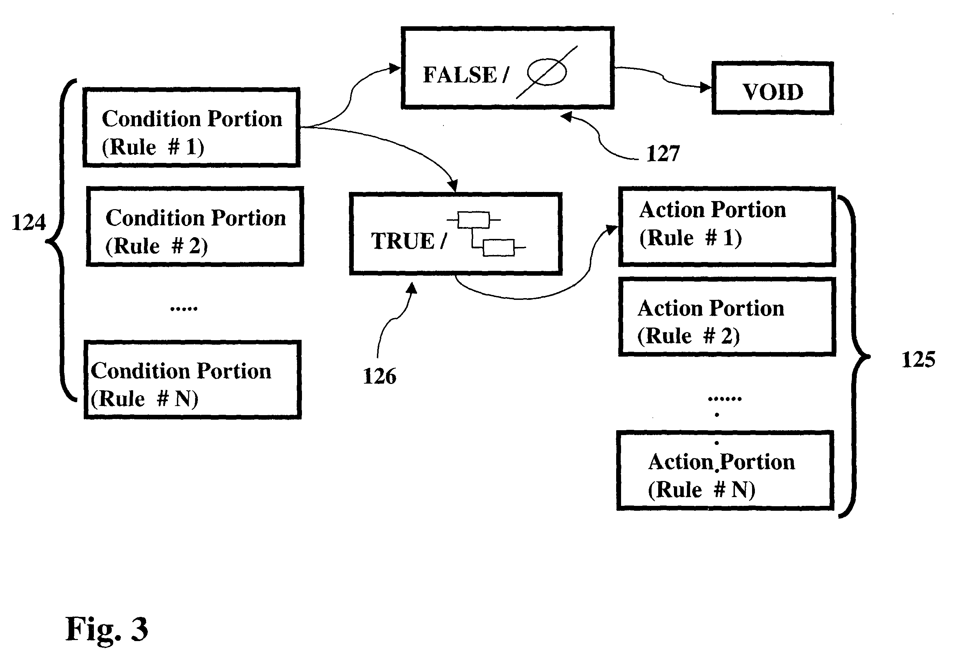

Particularly, referring also to the figure 3, any of the knowledge rules 122 can comprise a first portion 124 of knowledge rule (named in figure 3 as "Condition Portion") for generating one or more logic values and/or graphic logic elements 126. Said logic values and/or graphic logic elements are indicative of the existence of certain logic conditions that determine the kind of processing to which said pieces 109 of input information are subjected.

Moreover, any of the knowledge rules 122 can comprise a second portion 125 of knowledge rule (named in figure 3 as "Action Portion") for selecting, based on the logic values generated by the first portion of rules, one or more processing actions. The pieces of input information 109 are therefore subjected to the selected processing actions.

In practice, according to a preferred embodiment of the present invention, when the computerised knowledge interpreter 100 receives a piece of input information 109, it compares said piece of input information 109 with the "condition" portions of each of the knowledge rules. If a matching is present, then at least a logic value and/or a graphic logic element, indicative of a "positive" matching condition, is generated (reference 126 of figure 3). Otherwise, if there is no matching, at least a logic value and/or a graphic logic element, indicative of a "negative" matching condition, is generated (reference 127 of figure 3).

When a "positive" logic value and/or a graphic logic element is generated by a "condition" portion, the computerised knowledge interpreter is forced to select the "action" portion, which corresponds to said "condition" portion. Otherwise, a "VOID" action portion (corresponding to a stand-by status of the computerised knowledge interpreter) is selected.

The choice of generating logic values or graphic logic elements depends basically on the implementation of the "condition" and "action" portions of a knowledge rule.

Said "condition" and "action" portions can comprise one or more pieces of computer program that adopt a "script" language such as, for example the well known "JPython" language. In this case, at least a logic value (such as "TRUE" or "FALSE" of figure 3) is generated. Conversely, said "condition" and "action" portions can comprise one or more pieces of computer programs that adopt a "graphical" language such as, for example, a graphical language obtained from one of the well known functional block standard languages (e.g. IEC 1131 standard language). In this case, at least a logic graphic element (such as that one represented in the block 126 figure 3) is generated, in case of positive matching.

On the contrary, another logic graphic element (such as that one represented in the block 127 of figure 3) is generated, in case of negative matching.

According to a preferred embodiment of the present invention, a combination of said "script" language and said "graphical" language can be used for the "condition" and "action" portions of a knowledge rule. In this case, said first and second portions can easily include one or more separated sub-portions. Each of said sub-portions can comprise one or more pieces of computer program that use a language, which is obtained by means of a combination (for example taking or merging appropriately some coding rules) of said "script" language and said "graphical" language.

In this manner, a remarkable increase of the flexibility of the computerised knowledge interpreter operation is obtained.

For example, in a advantageous embodiment of the method according to the present invention, a "condition" portion can comprise a "precondition" sub-portion, a "condition" sub-portion and a "post-condition" sub-portion. All these sub-portions allow refining the logic conditions that determine the kind of processing to which said pieces of input information are subjected.

Accordingly, an "action" portion can comprise a "pre-action" sub-portion, a "action" sub-portion and a "post-action" sub-portion. All these sub-portions allow refining the selection of possible processing actions that are available to the computerised knowledge interpreter.

The advantages of the described embodiments of the method, according to the present invention, have proven to be quite remarkable, in the real practice.

The computerised knowledge interpreter can be adapted to the different tasks, provided by the method according to the present invention, without any need of new coding efforts. In practice, if particular needs arise, new knowledge rules can be added to the knowledge bases that are related to the various phases/steps of the method according to the present invention.

This means that, thanks to the computerised knowledge interpreter, it is possible to make the "conversion knowledge" directly accessible to the DCS expert. So, the entire conversion process is exploited more naturally and, therefore, with a higher level of reliability.

Moreover, the use of different mechanisms, for managing the knowledge rules (i.e. "script" or "graphical" languages or the like) makes more powerful the operation of the computerised knowledge interpreter.

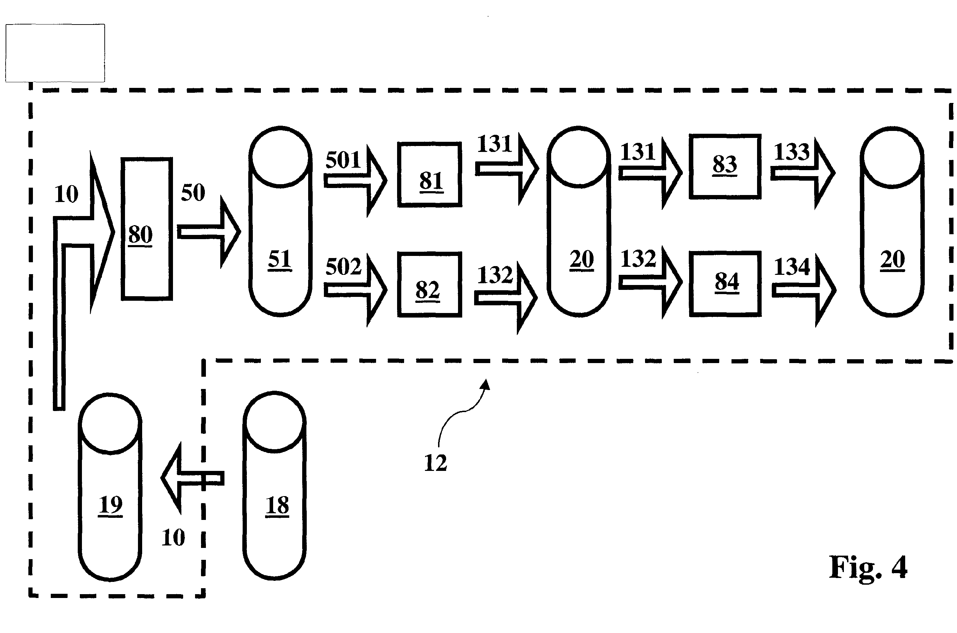

Referring now also to the figure 4, a preferred embodiment of the method according to the present invention is described.

According to this embodiment, the phase a) can comprise the step a.1) of acquiring the first information 10 from first storage means 18, for example a database. The first storage means 18 are advantageously included in first computerised tools (not shown) that are used for engineering and configuring the first DCS. Subsequently, the phase a) can provide the step a.2) of storing the first information 10 into second storage means 19 included in the computerised environment 12. Also the second storage means 19 can be represented, for example, by a database.

In practice, the steps a.1) and a.2) provide a direct acquisition of information from a computerised system, which is used for engineering and configuring the first DCS. This embodiment, which can be easily implemented by means of a suitable computerised interface, is particularly advantageous because it allows importing information, remarkably reducing the needed amount of human work. At step a.3) of the phase a), the first information 10 is preferably acquired from the second storage means 19, so as to make it available for the subsequent phases of the method according to the present invention.

The phase b) of this preferred embodiment of the method, according to the present invention, comprises advantageously the step b.1) of sending pieces of first information 10, in input to the computerised knowledge interpreter (not shown in figure 4). Subsequently, it is provided the step b.2) of generating, by means of the computerised knowledge interpreter, pieces of first intermediate information 50. The pieces of the first intermediate information 50 comprise advantageously a first intermediate format provided with a third syntax and said first semantics. In figure 4, the block 80 represents the sequence including the step b.1) and the step b.2).

Then the step b.3) of storing the pieces of first intermediate information 50 into first intermediate storage means 51 can be provided.

Subsequently, at step b.4) a first portion 501 of the pieces of first intermediate information 10 is sent in input to the computerised knowledge interpreter and at step b.5) a second portion 502 of the pieces of first intermediate information 10 is sent in input to the computerised knowledge interpreter.

Subsequently, it is provided the step b.6) of generating, by means of the computerised knowledge interpreter, a first portion 131 of pieces of third information 13. Said first portion 131 of pieces of third information 13 comprises preferably a third format provided with said third syntax and a third semantics. Accordingly, it is provided the step b.7) of generating by means of the computerised knowledge interpreter, a second portion 132 of pieces of third information 13. The second portion 132 of pieces of third information 13 comprising a format, which is substantially equivalent to said first intermediate format.

In figure 4, the block 81 represents the sequence comprising the step b.4) and the step b.6) while the block 82 represents the sequence comprising the step b.5) and the step b.7).

Finally, the phase b) provides the step b.8) of storing said first portion 131 and said second portion 132 of pieces of third information 13 into third storage means 20 included in the computerised environment 12.

The first portion 131 of pieces of third information 13 is generally generated in normal operating conditions, when an optimisation of the information content is needed. On the other hand, the second portion 132 of pieces of information 13 is generated if there are some pieces of the first information 10, for which the semantics conversion is particularly difficult. This may happen in case of conversion of the information related to very complicated elements of the DCS HW/SW configuration, such as, for example, huge "PID" controllers or the like. In fact, the first semantics comprised in the mentioned first format of the first information 10 might be not compatible with the third semantics comprised in the mentioned third format of the third information 13.

In this case, due to the need of avoiding a heavy conversion process, the conversion of the semantics is not performed but only the syntax is converted.

The practice has shown that, generally, the amount of pieces of information that are difficult to translate is small in comparison to the whole amount of the information 10. In spite of this, they can remarkably delay the conversion process. Moreover, for the conversion of said "complicated" pieces of information the third format of the information 13 should include semantics rules that are rarely used and that are very specific for a certain DCS. This would provoke a remarkable consumption of processing resources in the practical implementation of the method according to the present invention.

The generation of the second portion 132 of the information 13 is therefore a quite useful "shortcut" for making the method according to the present invention more flexible and more easy to implement.

In any case, the amount of information included in both the first and second portion of pieces of information 13 can vary (from 0% to the 100%), according to the needs. So, in extreme situations, said first 131 or said second portion 132 may be void.

Referring again to figure 4, in a further preferred embodiment of the method, according to the present invention, the phase e) can comprise the step e. 1) of acquiring the first portion 131 and the second portion 132 of pieces of the third information 13 from the third storage means 20.

Then the step e.2) of sending the first portion 131 of pieces of the third information 13, in input to the computerised knowledge interpreter and the step e.3) of generating, by means of the computerised knowledge interpreter, a first processed portion 133 of pieces of third information 13 are provided.

In figure 4, the block 83 represents the sequence comprising the step e.2) and the step e.3).

The first processed portion 133 of pieces of third information 13 comprises advantageously a format, which is equivalent to said third format.

Accordingly, the phase e) can also comprise the step e.4) of sending the second portion 132 of pieces of the third information 13, in input to the computerised knowledge interpreter. The phase e) can also comprise the step e.5) of generating, by means of the computerised knowledge interpreter, a second processed portion 134 of pieces of third information 13. Said second processed portion 134 of pieces of third information 13 comprises advantageously a second intermediate format provided with said third syntax and said second semantics.

In figure 4, the block 84 represents the sequence comprising the step e.4) and the step e.5).

Finally, the phase e) can provide the step e.6) of storing the portions 133 and 134 of pieces of the third information 13 into the third storage means 20.

As mentioned above, the HW/SW configuration of the virtual DCS is at least partially independent of the HW/SW configuration of the first and second distributed control systems.

The representation of the HW/SW configuration of the virtual DCS might be obtained in various manners. In a preferred embodiment of the method, according to the present invention, the third information 13 describe the HW/SW configuration of a virtual DCS through the combination of different sets of information. Each set of information comprises pieces of information that are related to non-overlapping aspects of the hardware/software configuration of the virtual DCS.

In this manner, the HW/SW configuration of the virtual DCS is described combining sets of information, which are substantially "orthogonal". Also the implicit relationships, hidden in the HW/SW configuration of the first DCS, can be easily represented and, therefore, converted reducing to negligible levels the probability of missing information.

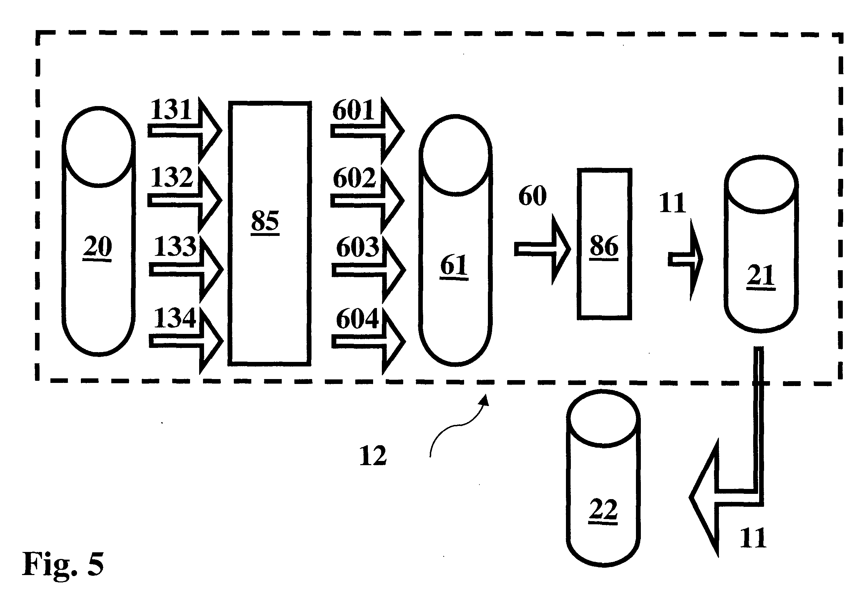

Referring now to figure 5, other features of the preferred embodiment of the method, according to the present invention, which has been partially illustrated in figure 4, are described.

The phase c) (block 85) comprises preferably the step c.1) of acquiring from the third storage means 20, the following portions of pieces of third information 13
- the first portion 131; and/or
- the second portion 132; and/or
- the first processed portion 133; and/or
- the second processed portion 134.

Then, the phase c) can comprise the step c.2) of sending in input to the computerised knowledge interpreter said portions 131, 132, 133, 134 of pieces of third information 13. Subsequently, the phase c) can provide the step c.3) of generating, by means of the computerised knowledge interpreter, the following portions of pieces of second intermediate information 60:
- a first portion 601, which comprises a format equivalent to said second intermediate format; and/or
- a second portion 602, which comprises a format equivalent to said second intermediate format; and/or
- a third portion 603, which comprises a format equivalent to said second intermediate format; and/or
- a fourth portion 604, which comprises a format equivalent to said second intermediate format.

The phase c) can further provided the step c.4) of storing the portions 601, 602, 603 and 604 of second intermediate information 60 into second intermediate storage means 61, included in the computerised environment 12.

At this point of the process, the portions 601, 602, 603, 604 can be considered as a whole, due to fact that they have the same format.

Subsequently, the step c.7) of acquiring pieces of the second intermediate information 60 from the second intermediate storage means 61 and the step c.8) of sending pieces of the second intermediate information 60, in input to said computerised knowledge interpreter may be provided.

Finally the phase c) can provided the step c.9) of generating (block 86), by means of the computerised knowledge interpreter, pieces of the second information 11.

Symmetrically to the phase a), the phase d) can comprise the step d.1) of storing said pieces of the second information 11 into fourth storage means 21, included in the computerised environment 12. Subsequently, the step d.2) of acquiring the second information from the fourth storage means 21 and the step d.3) of storing the second information 11 into fifth storage means 22 can be provided. The fifth storage means 22 can advantageously be included in second computerised tools (not shown) used for engineering and configuring the second DCS.

Also this embodiment of the method, according to the present invention, is particularly advantageous due to the fact that it provides the export of the information 11 remarkably reducing the needed amount of human work. Moreover, the second information 11 is made available to the computerised tools that are used for engineering and configuring the second DCS.

The method according to the present invention has proven to be of easy practical implementation.

In fact, the computerised environment 12 can be considered as a computerised framework for implementing the method according to the present invention.

The computerised environment 12 can be realised in practice using computerised tools that are available in the state of the art. Particularly, a personal computer running a suitable multitasking operating system, provided with windowing GUI (Graphical User Interface) capabilities, might be used. Moreover, a Java virtual machine adapted for said multitasking operating system might be also advantageously used.

As mentioned above, the computerised environment 12 can comprise the computerised knowledge interpreter 100 and also the knowledge bases 102, 103 and 104.

In a preferred embodiment of the method, according to the present invention, one or more of the phases from a) to e) can be activated, according to adjustable sequences, by first computerised means (not shown), included in the computerised environment 12. The first computerised means can be represented, for example, by a first suitable programmable computerised interface, available the computerised environment 12.

This embodiment is particularly advantageous because the user is allowed managing all the transitions of the information during the process flow. In particular, the various phases/steps of the method, according to the present invention, can be performed according to sequences that can be set by the user according to the needs. This fact implies remarkable advantages in terms of flexibility and applicability of the method according to the present invention.

These advantages are also more evident in another possible embodiment of the method according to the present invention. According to this embodiment, the computerised environment 12 comprises second computerised means (not shown) for logging the sequence of transitions to which a selected information item is subject during one or more of said phases from a) to e).

Obviously, the mentioned information item can be related to one or more aspects of the first or the second or the virtual DCS and therefore it can be selected from said first information and/or from said second information and/or from said third information.

In practice, the second computerised means allows selecting the information item according to a predefined set of descriptive attributes, Then, once the information item is selected, the second computerised means allows building data structures that keep track of the transitions to which said information item is subjected. For example, said data structures can comprise one or more so called "transition graphs", visible to the user, that allow describing the complete transition story of the selected item. Obviously, the user can modulate, through the second computerised means, the scope and the extension of the tracing activity.

Also the first computerised means are of easy practical implementation. They might be represented, for example, by a second suitable programmable computerised interface running in the computerised environment 12.

The method, according to the present invention, is susceptible of numerous modifications and variations, all of which are within the scope of the inventive concept. All the details may furthermore be replaced with other technically equivalent elements.

## Claims

1. A method for converting first information comprising a first format provided with a first syntax a first semantics for describing the hardware/software configuration of a first distributed control system, into second information comprising a second format provided with a second syntax and a second semantics for describing the hardware/software configuration of a second distributed control system, **characterised in that** it comprises the following phases:
a) importing said first information into a computerised environment;
b) converting, by means of a computerised knowledge interpreter, said first information into third information comprising one or more formats for describing the hardware/software configuration of a virtual distributed control system, the hardware/software configuration of said virtual distributed control system being at least partially independent from the hardware/software configurations of said first and second distributed control systems respectively;
c) converting, by means of said computerised knowledge interpreter, said third information into said second information;
d) exporting said second information out of said computerised environment.

2. A method, according to the claim 1, **characterised in that** it comprises also the phase e) of processing, by means of said computerised knowledge interpreter, said third information.

3. A method according to the previous claims **characterised in that** said computerised knowledge interpreter comprises one or more computer programs adopting, during the execution of said phases b) and/or and c) and/or e), one or more predefined sets of knowledge rules, said predefined sets of knowledge rules being stored in one or more computerised knowledge bases, linked to said computerised knowledge interpreter.

4. A method, according to the claim 3, **characterised in that** said computerised knowledge interpreter:
- receives one or more pieces of input information; and
- processes, based on said knowledge rules, said pieces of input information by means of one or more computerised programs;
- generates one or more pieces of output information.

5. A method, according to claim 4, **characterised in that** one or more of said knowledge rules comprise:
- a first portion of knowledge rule for generating logic values and/or graphic logic elements, said one or more logic values and/or graphic logic elements being indicative of the existence of predefined logic conditions for processing said pieces of input information; and
- a second portion of knowledge rule for selecting, based on said plurality of logic values, a processing action, said pieces of input information being subjected to said processing action for generating said pieces of output information.

6. A method, according to claim 3, **characterised in that** said first portion of knowledge rule and/or said second portion of knowledge rule comprises one or more pieces of computer program, said pieces of computer program using a "script" language or a "graphical" language.

7. A method, according to the claims 3 and 4, **characterised in that** said first portion of knowledge rule and/or said second portion of knowledge rule includes one or more separated sub-portions comprising one or more pieces of computer program, said pieces of computer program using a language obtained by means of a combination of said "script" language and said "graphical" language.

8. A method according to one or more of the previous claims, **characterised in that**:
- said input information has a input format, comprising an input syntax and an input semantics; and
- said output information has an output format, comprising an output syntax and an output semantics.

9. A method, according to claim 8, **characterised in that**:
- said input syntax is equivalent to said output syntax; and
- said input semantics is equivalent to said output semantics.

10. A method, according to claim 8, **characterised in that**:
- said input syntax is equivalent to said output syntax; and
- said input semantics is different from said output semantics.

11. A method, according to claim 8, **characterised in that**:
- said input syntax is different from said output syntax; and
- said input semantics is equivalent to said output semantics.

12. A method, according to claim 8, **characterised in that**:
- said input syntax is different from said output syntax; and
- said input semantics is different from said output semantics.

13. A method, according to the previous claims, **characterised in that** said phase a) comprises the steps of:
a.1) acquiring said first information from first storage means, said first storage means being included in first computerised tools used for engineering and configuring said first distributed control system;
a.2) storing said first information into second storage means, said second storage means being comprised in said computerised environment;
a.3) acquiring said first information from said second storage means.

14. A method, according to one or more of the previous claims, **characterised in that** said phase b) comprises the following steps:
b.1) sending pieces of said first information in input to said computerised knowledge interpreter;
b.2) generating, by means of said computerised knowledge interpreter, pieces of first intermediate information, said pieces of first intermediate information comprising a first intermediate format provided with a third syntax and said first semantics;
b.3) storing said pieces of first intermediate information into first intermediate storage means;
b.4) sending a first portion of said pieces of first intermediate information in input to said computerised knowledge interpreter;
b.5) sending a second portion of said pieces of first intermediate information in input to said computerised knowledge interpreter;
b.6) generating, by means of said computerised knowledge interpreter a first portion of pieces of third information, said first portion of pieces of third information comprising a third format provided with said third syntax and a third semantics;
b.7) generating, by means of said computerised knowledge interpreter, a second portion of pieces of third information, said second portion pieces of third information comprising a format equivalent to said first intermediate format;
b.8) storing said first portion and said second portion of pieces of said third information into third storage means, said third storage means being included in said computerised environment.

15. A method, according to one or more of the previous claims, **characterised in that** said phase e) comprises the following steps:
e.1) acquiring said first portion and said second portion of pieces of said third information from said third storage means;
e.2) sending, said first portion of pieces of said third information, in input to said computerised knowledge interpreter;
e.3) generating, by means of said computerised knowledge interpreter, a first processed portion of pieces of third information, said first processed portion of third information comprising a format equivalent to said third format;
e.4) sending said second portion of pieces of said third information, in input to said computerised knowledge interpreter;
e.5) generating, by means of said computerised knowledge interpreter, a second processed portion of pieces of third information, said second portion of third information comprising a second intermediate format provided with said third syntax and said second semantics;
e.6) storing said first processed portion and said processed second portion of pieces of third information into said third storage means.

16. A method, according to one or more of the previous claims, **characterised in that** said phase c) comprises the following steps:
c.1) acquiring from said third storage means:
- said first portion of pieces of third information; and/or
- said second portion of pieces of third information; and/or
- said first processed portion of third information; and/or
- said second processed portion of third information; and/or
c.2) sending in input to said computerised knowledge interpreter:
- said first portion of pieces of third information; and/or
- said second portion of pieces of third information; and/or
- said first processed portion of third information; and/or
- said second processed portion of third information; and/or
c.3) generating, by means of said computerised knowledge interpreter:
- a first portion of pieces of second intermediate information, said first portion of pieces of said second information comprising a format equivalent to said second intermediate format; and/or
- a second portion of pieces of second intermediate information, said second portion of pieces of said second information comprising a format equivalent to said second intermediate format; and/or
- a third portion of pieces of second intermediate information, said third portion of pieces of said second information comprising a format equivalent to said second intermediate format; and/or
- a fourth portion of pieces of second intermediate information, said first portion of pieces of said second information comprising a format equivalent to said second intermediate format;
c.4) storing said first portion, said second portion, said third portion and said fourth portion of pieces of second intermediate information into second intermediate storage means, said second intermediate storage means being included in said computerised environment;
c.7) acquiring pieces of said second intermediate information from said second intermediate storage means;
c.8) sending said pieces of said second intermediate information, in input to said computerised knowledge interpreter;
c.9) generating, by means of said computerised knowledge interpreter, pieces of said second information.

17. A method, according to one or more of the previous claims, **characterised in that** said phase d) comprises the steps of:
d.1) storing said pieces of said second information into fourth storage means, said fourth storage means being included in said computerised environment;
d.2) acquiring said second information from said fourth storage means;
d.3) storing said second information into fifth storage means, said fifth storage means being included in second computerised tools used for engineering and configuring said second distributed control system.

18. A method, according to one or more of the previous claims, **characterised in that** said third information and said third processed information describe the hardware/software configuration of said virtual distributed control system by means of the combination of sets of information, said sets of information comprising pieces of information related to non-overlapping aspects of the hardware/software configuration of said virtual distributed control system.

19. A method, according to one or more of the previous claims, **characterised in that** one or more of said phases from a) to e) is activated, according to adjustable sequences, by first computerised means, said first computerised means being included in said computerised environment.

20. A method, according to one or more of the previous claims, **characterised in that** said computerised environment comprises second computerised means for logging the sequence of transitions to which a selected information item is subjected during one or more of said phases from a) to e).

21. A method, according to claim 20, **characterised in that** said information item is selected from said first information and/or from said second information and/or from said third information.

22. A method, according to claims 20 and 21, **characterised in that** said second computerised means build one or more data structures for keeping track of the transitions to which said information item is subjected.

23. A method, according to claim 22, **characterised in that** said data structures comprise one or more transition graphs, visible to the user.

24. A computerised tool, **characterised in that** it implements a method for converting first information comprising a first format provided with a first syntax and a first semantics for describing the hardware/software configuration of a first distributed control system, into second information comprising a second format provided with a second syntax and a second semantics for describing the hardware/software configuration of a second distributed control system, according to one or more of the previous claims.
